# DEMANDE DE BREVET EUROPEEN

(11) **EP 3 643 751 A1**
(43) Date de publication de la demande: **29.04.2020**
(21) Numéro de dépôt: 18020554.4
(22) Date de dépôt: 24.10.2018
(51) Int. Cl.: C08L 97/02, C04B 18/24

(54) **PROCEDE POUR UTILISER DE NOUVELLES SUBSTANCES BRUTES POUR REMPLACER LA FABRICATION DE MATERIAUX UTILISANT DU BOIS NATUREL DANS L'INDUSTRIE DU BOIS**

(71) Demandeur: Aljbeiri, Omar, 99903 Gaza (IL)
(72) Inventeur: Aljbeiri, Omar, 99903 Gaza (IL)
(74) Mandataire: Audusseau-Girardeau, Magaly

(57) **Abrégé**

L'invention concerne notamment un procédé de réalisation d'un objet de construction (19), par exemple pour réaliser du mobilier. Le procédé utilise des noyaux de fruits à écale ou de fruits mous et comporte les étapes suivantes :
- séparation des noyaux et des enveloppes des fruits,
- éventuellement séparation additionnelle des noyaux et des graines des fruits,
- séchage des noyaux des fruits,
- broyage des noyaux, de manière à obtenir une poudre de noyaux (11),
- mélange de ladite poudre de noyaux (11) avec une substance adhésive (13), de manière à obtenir une pâte (16),
- compression de ladite pâte (16) dans un moule, ledit moule présentant une empreinte de l'objet de construction(19), et
- ultime séchage de ladite pâte et démoulage de l'objet de construction (19).

## Description

L'invention a trait notamment à la fabrication de panneaux, par exemple pour réaliser du mobilier à partir de matériaux non polluants.

L'invention vise à supprimer l'utilisation de bois dans la fabrication de panneaux pour mobilier, afin de limiter l'impact sur la déforestation mondiale.

Le bois est aujourd'hui utilisé dans la fabrication de nombreux éléments : les fournitures de bureau, les matériaux de construction des immeubles, des meubles. Le bois utilisé provient la plupart du temps de forêts mais également de bois recyclé (bois de charpente notamment).

La déforestation est une des causes du réchauffement climatique : l'invention a pour objet de proposer une alternative à l'utilisation du bois pour réaliser un matériau apte à se présenter sous forme de panneaux, capables de remplacer ceux réalisés à partir de bois (recyclé ou non).

L'invention concerne, dans un premier temps, un procédé de réalisation d'un objet de construction, ledit procédé utilisant des noyaux de fruits à écale ou de fruits mous, ledit procédé comportant les étapes suivantes :
- séparation des noyaux et des enveloppes des fruits,
- éventuellement séparation additionnelle des noyaux et des graines des fruits,
- séchage des noyaux des fruits,
- broyage des noyaux, de manière à obtenir une poudre de noyaux,
- mélange de ladite poudre de noyaux avec une substance adhésive, de manière à obtenir une pâte,
- compression de ladite pâte dans un moule, ledit moule présentant une empreinte d'un objet de construction, et
- ultime séchage de ladite pâte et démoulage de l'objet de construction.

On comprendra par « écale » la partie du fruit sec qui enveloppe la coque ou coquille dudit fruit : par exemple, l'écale d'une noix est la partie tendre du fruit qui entoure la coque de la noix. Pour libérer la noix de son fruit, l'écale est retirée. La coque (ou coquille) de noix est le noyau du fruit à écale et la partie comestible de la noix est la graine contenue dans le noyau.

Ainsi, on comprendra par « noyaux de fruits secs » toutes les coques de fruits secs de type noix, noisettes, amandes, noix de cajous, cacahouètes, noix de coco, fruit du palmier à huile (*Elaeis guineensis* Jacq.) etc. et on comprendra par « noyaux de fruits mous », les noyaux des olives, des abricots, des pêches, des mirabelles, des prunes etc.

L'objet de construction obtenu présente des parois lisses sur lesquelles on peut apposer ou fixer n'importe quel film de recouvrement. Les parois peuvent également être peintes.

Par ailleurs, l'objet de construction obtenu est extrêmement rigide, ou à tout le moins aussi rigide qu'un panneau de médium réalisé à partir de bois ou de bois recyclé.

Le procédé conforme à l'invention peut également comporter les caractéristiques suivantes, prises séparément ou en combinaison :
- l'étape de séparation est réalisée par une machine à dénoyauter,
- l'étape de séchage desdits noyaux de fruits est réalisée en laissant les noyaux sécher au soleil pendant une période comprise entre quatre et sept jours et en les retournant régulièrement,
- la substance adhésive est de la colle pour bois comportant de l'acétate de polyvinyle,
- l'étape de mélange est réalisée en mélangeant 70% en poids de poudre de noyaux avec 30% en poids de colle pour bois,
- l'étape de compression est réalisée par compression hydraulique, la compression étant réalisée à une pression de sensiblement 25kg /100 cm² pendant un intervalle de temps compris entre sensiblement 10 et 15 minutes,
- l'ultime étape de séchage est réalisée pendant un intervalle de temps compris entre sensiblement six et dix jours avant démoulage.

Conformément à l'invention, et comme il sera expliqué par la suite, le procédé peut comporter une étape de réalisation d'une structure sandwich : l'objet de construction réalisé est un panneau et le procédé comporte une ultime étape suivant laquelle on colle, de part d'autre dudit objet de construction sous forme de panneau, une plaque réalisée dans un autre matériau. La plaque réalisée dans un autre matériau peut être une plaque de médium.

Comme il sera expliqué dans les exemples de réalisation, lesdits noyaux de fruit utilisés dans le procédé peuvent être des noyaux d'olives, des coquilles de noix, des coques de noix de coco, des coques du fruit du palmier à huile ou bien encore un mélange de différents types de noyaux de fruits.

Enfin, l'invention vise un objet de construction obtenu par le procédé tel que défini ci-dessus.

Pour pouvoir être exécutée, l'invention est exposée de façon suffisamment claire et complète dans la description suivante qui est, en plus, accompagnée de dessins dans lesquels :
[Fig 1] La figure 1 est une vue en perspective de deux fruits à noyaux, montrant les deux fruits avant et après dénoyautage,
[Fig 2] La figure 2 illustre autre fruit à noyau, vu en perspective, avant et après dénoyautage, ainsi qu'après le retrait de la graine comprise dans le noyau,
[Fig 3] La figure 3 montre une étape de séchage conforme au procédé selon l'invention,
[Fig 4] La figure 4 illustre une autre étape du procédé conforme à l'invention,
[Fig 5] La figure 5 illustre encore une autre étape du procédé conforme à l'invention,
[Fig 6] La figure 6 illustre encore une autre étape du procédé conforme à l'invention,
[Fig 7] La figure 7 montre un objet de construction conforme à l'invention, et
[Fig 8] la figure 8 illustre une variante de réalisation d'un objet de construction conforme à l'invention.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

Dans le procédé conforme à l'invention qui va maintenant être décrit, on utilise des noyaux d'olives comme matière première.

Toutefois, d'autres noyaux d'autres fruits pourraient être utilisés pour mettre en oeuvre le procédé conforme à l'invention.

L'objet de construction qui est réalisé par le procédé conforme à l'invention est un panneau : il devra être compris que l'invention n'est pas limitée à la fabrication d'un panneau.

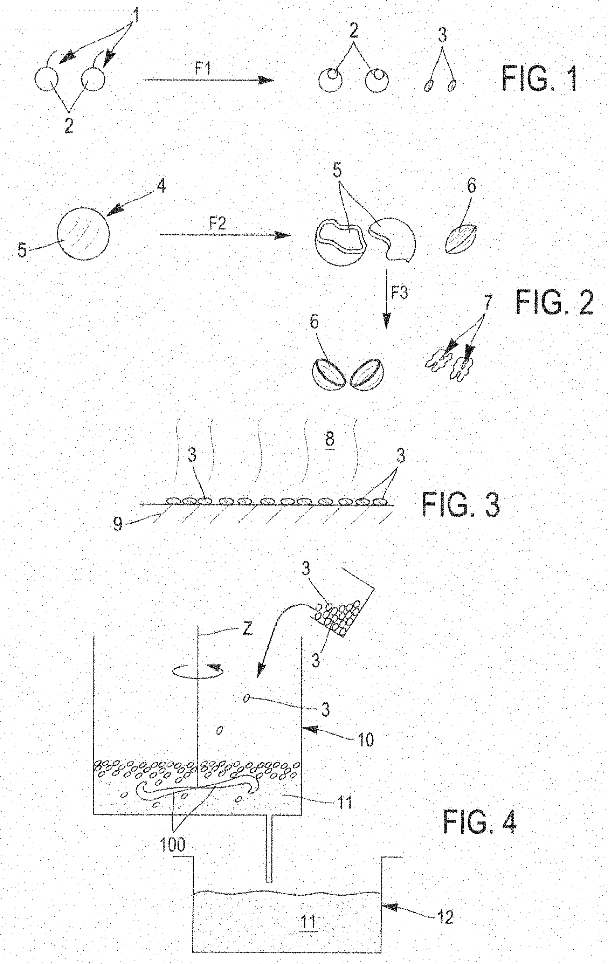

La figure 1 illustre deux olives 1, les olives étant considérées dans la présente description comme des fruits mous, c'est-à-dire des fruits comportant un noyau 3 dur autour duquel est attachée de la chair 2 de fruit (ou enveloppe de fruit), la chair 2 étant protégée par une pellicule de peau.

La figure 1 montre que, suivant la première étape du procédé conforme à l'invention (symbolisée par la flèche F1) la chair 2 (ou enveloppe) est séparée du noyau 3 par une opération de séparation. Dans le cadre de notre exemple, la séparation est un dénoyautage qui est réalisée industriellement par une machine à dénoyauter.

La figure 2 illustre également une étape de séparation conforme à l'invention, à partir d'un fruit à écale 4 : dans ce cas, le fruit à écale est une noix. L'étape de séparation est réalisée en deux temps : une première sous-étape F2 consiste à retirer l'écale 5, c'est-à-dire l'enveloppe molle du fruit qui entoure la coque 6 de la noix. Puis, dans une seconde sous-étape F3, la noix comestible 7 (c'est-à-dire les cerneaux constituant la graine contenue dans le noyau/ coque 6) est séparée de la coque 6 en cassant ladite coque.

Dans les deux exemples cités ci-avant, le procédé utilisera le noyau du fruit pour réaliser le panneau de matériau conforme à l'invention, c'est-à-dire :
- Le noyau 3 pour les olives,
- La coque 6 pour les noix.

On préférera la séparation au moyen de machines plutôt que la séparation dans de l'eau. En effet, les procédés connus de séparation qui utilisent de l'eau conduisent à rallonger le temps de réalisation de l'étape suivante.

Conformément au procédé selon l'invention, une fois les noyaux des fruits isolés, ils sont séchés comme illustré en figure 3 : le séchage peut se faire dans des machines industrielles, ou bien à l'air libre.

Dans le cadre du procédé conforme à l'invention, et suivant un exemple préféré écologique, les noyaux 3 d'olive sont séchés sous les rayons du soleil à l'air libre 8. Les noyaux sont placés sur un support ou à même le sol 9. Ils sont également retournés régulièrement de sorte à sécher uniformément.

Dans des conditions normales de pression et de température avoisinant les 1015 hPa (hectopascals) et 20 °C, les noyaux sèchent durant une période comprise entre sensiblement quatre et sept jours.

Une fois séchés, les noyaux 3 sont broyés de manière à les réduire en poudre. Pour ce faire, comme illustré en figure 4, les noyaux 3 sont insérés dans une machine broyeuse 10 (munie d'une double lame 100 entraînée en rotation autour de son axe Z) qui les réduit en poudre 11 aussi fine que de la poussière, et la poudre 11 de noyau 3 est récoltée dans un récipient 12.

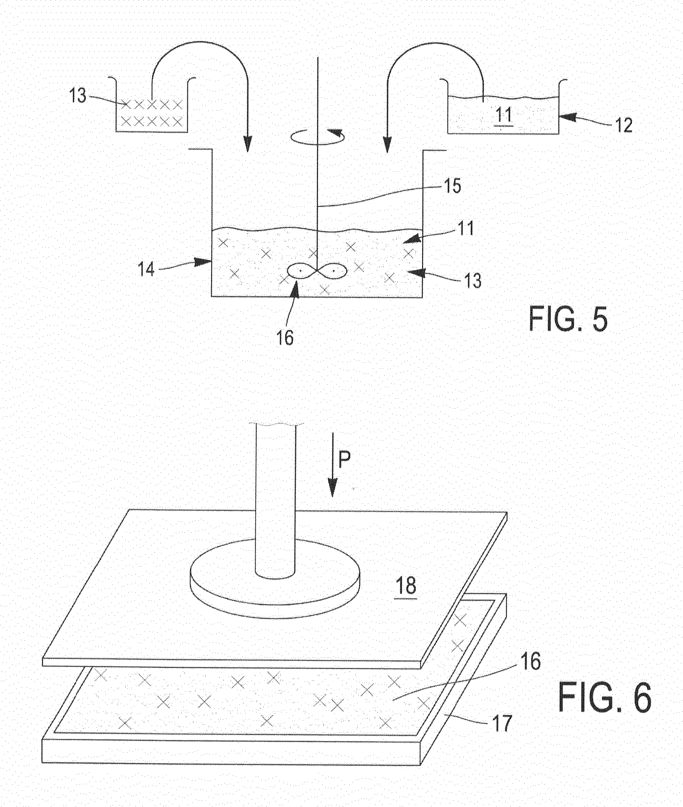

Puis, comme montré en figure 5, la poudre 11 de noyaux est mélangée une substance adhésive 13, du type colle à bois comportant de l'acétate de polyvinyle (encore appelé « poly (acétate de vinyle) »).

Cette substance appelée « colle blanche » est choisie parmi d'autres car elle est flexible et présente un caractère non acide.

Les deux substances sont mélangées dans des proportions qui permettent d'obtenir un panneau plus ou moins rigide.

Pour obtenir un panneau rigide, on mélangera 70% en poids de poudre 11 de noyaux 3 et 30% en poids de substance adhésive 13.

Le mélange se fait industriellement dans une cuve 14 équipée d'une hélice double pâle 15 (agitateur), par exemple.

Un fois que le mélange est réalisé, on obtient une pâte 16 homogène que l'on verse dans un récipient 17.

Le récipient 17 sert de moule : c'est la forme intérieure du récipient 17 qui va donner la forme au panneau de matériau conforme à l'invention.

Dans le cadre de ce mode de réalisation, le récipient 17 est en forme de plateau rectangulaire, présentant un bord dont la hauteur est comprise entre sensiblement 3 et 10 cm (suivant l'épaisseur de panneau souhaitée).

Puis, la pâte 16 est compressée par une presse : la compression est hydraulique et est réalisée par une machine : une plaque 18 est placée sur la pâte 16 se trouvant dans le récipient 17, et une pression est appliquée sur la plaque 18 par la machine hydraulique,

La pression P exercée est de sensiblement 25 kg /100 cm² pendant un intervalle de temps compris entre 10 et 15 minutes.

L'étape de compression permet de chasser les bulles d'air et de densifier le matériau.

Conformément à l'invention, le panneau va sécher dans le récipient 17, pendant un intervalle de temps compris entre six et dix jours.

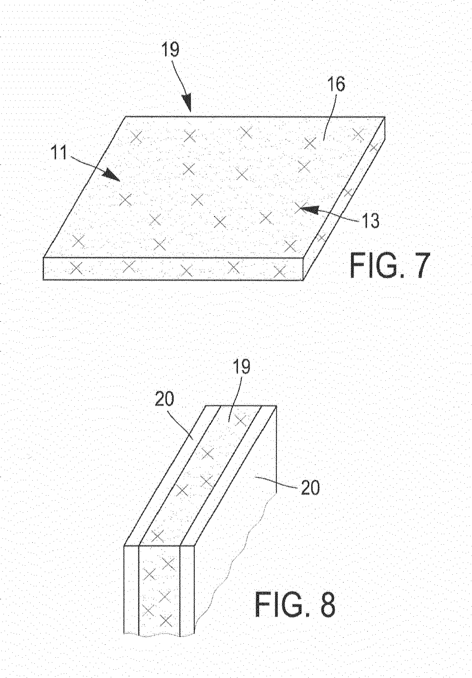

A l'issue de cet intervalle, le panneau 19 de matériau est démoulé, comme montré en figure 7.

Le panneau 19 réalisé ainsi est un panneau plein, rigide et capable de supporter des efforts mécaniques aussi importants, voire plus importants, que ceux supportés par des panneaux de médium classiquement utilisés pour réaliser des meubles en kit.

Suivant une ultime étape, on peut ajouter au panneau deux plaques 20 de médium ou deux plaques de matériau différents de celui de l'invention (réalisé à partir de colle et de noyaux de fruits) : ainsi, le consommateur peut retrouver l'aspect d'un panneau classique avec la résistance du panneau conforme à l'invention.

Il peut s'agir de plaque métallique, plastique, composite...

On comprendra de ce qui précède comment l'invention permet de s'affranchir d'utiliser du bois pour réaliser des panneaux de matériau pour construire des meubles ou aménager des immeubles.

Il devra toutefois être compris que l'invention n'est pas limitée à l'utilisation de noyaux d'olives pour la réalisation de panneaux de matériaux : en effet, on pourrait utiliser des noyaux d'abricot, de pêche... ou tout autre noyau de fruits mous.

Comme il a été expliqué précédemment, le procédé pourrait également être mis en oeuvre en utilisant des noyaux de fruits à écale, comme les coques de noix de coco, les coquilles de noix ou d'amandes ou les coques des fruits des palmiers à huile (Elaeis guineensis Jacq).

Enfin, un mélange de noyaux pourrait être réalisé dans le cadre du procédé conforme à l'invention : par exemple, on pourrait utiliser une poudre de noyaux issue du broyage des noyaux d'olive et des coquilles de noix, ou des coques de noix de coco, par exemple.

Enfin, la substance adhésive utilisée pourrait être différente de la colle blanche décrite précédemment, sans sortir du cadre de l'invention, pourvue qu'elle soit suffisamment fluide pour permettre son mélange avec la poudre de noyaux de façon homogène.

L'invention s'étend à la mise en oeuvre de tout moyen équivalent.

## Revendications

1. Procédé de réalisation d'un objet de construction (19), ledit procédé utilisant des noyaux (3, 6) de fruits à écale (4) ou de fruits mous (1), ledit procédé comportant les étapes suivantes :
- séparation (F1, F2) des noyaux (3, 6) et des enveloppes (2, 5) des fruits (4, 1),
- éventuellement séparation additionnelle (F3) des noyaux (6) et des graines (7) des fruits (4),
- séchage des noyaux (3, 6) des fruits (4, 1),
- broyage des noyaux (3, 6), de manière à obtenir une poudre de noyaux (11),
- mélange de ladite poudre de noyaux (11) avec une substance adhésive (13), de manière à obtenir une pâte (16),
- compression de ladite pâte (16) dans un moule (17), ledit moule (17) présentant une empreinte de l'objet de construction (19), et
- ultime séchage de ladite pâte (16) et démoulage de l'objet de construction (19).

2. Procédé selon la revendication 1, **caractérisé en ce que** l'étape de séparation (F1) est réalisée par une machine à dénoyauter.

3. Procédé selon la revendication 1 ou 2, **caractérisé en ce que** l'étape de séchage desdits noyaux (3, 6) de fruits (1, 4) est réalisée en laissant les noyaux (3, 6) sécher au soleil pendant une période comprise entre quatre et sept jours et en les retournant régulièrement.

4. Procédé selon l'une quelconque des revendications précédentes, **caractérisé en ce que** la substance adhésive (13) est de la colle pour bois comportant de l'acétate de polyvinyle.

5. Procédé selon l'une quelconque des revendications précédentes, **caractérisé en ce que** l'étape de mélange est réalisée en mélangeant 70% en poids de poudre de noyaux (11) avec 30% en poids de colle pour bois.

6. Procédé selon l'une quelconque des revendications précédentes, **caractérisé en ce que** l'étape de compression est réalisée par compression hydraulique (P), la compression étant réalisée à une pression de sensiblement 25kg /100 cm² pendant un intervalle de temps compris entre sensiblement dix et quinze minutes.

7. Procédé selon l'une quelconque des revendications précédentes, **caractérisé en ce que** l'ultime étape de séchage est réalisée pendant un intervalle de temps compris entre sensiblement six et dix jours avant démoulage.

8. Procédé selon l'une quelconque des revendications précédentes, **caractérisé en ce que** l'objet de construction est un panneau et **en ce que** le procédé comporte une étape de réalisation d'une structure sandwich en collant, de part d'autre dudit panneau (19) de matériau obtenu une plaque (20) réalisée dans un autre matériau.

9. Procédé selon la revendication 8, **caractérisé en ce que** la plaque (20) réalisée dans un autre matériau est une plaque de médium.

10. Procédé selon l'une quelconque des revendications précédentes, **caractérisé en ce que** lesdits noyaux de fruit sont des noyaux d'olives (1).

11. Procédé selon l'une quelconque des revendications 1 à 9, **caractérisé en ce que** lesdites noyaux de fruits sont des noyaux de fruits de palmiers à huile.

12. Procédé selon l'une quelconque des revendications 1 à 9, **caractérisé en ce que** les noyaux de fruits sont des coquilles de noix (6).

13. Procédé selon l'une quelconque des revendications 1 à 9, **caractérisé en ce que** les noyaux de fruits sont des coques de noix de coco.

14. Procédé selon l'une quelconque des revendications 1 à 9, **caractérisé en ce que** les noyaux de fruits sont un mélange de différents types de noyaux de fruits.

15. Objet de construction (19) obtenu par le procédé selon l'une quelconque des revendications précédentes.
